**Europäisches Patentamt**

**European Patent Office**

**Office européen des brevets**

(11) Veröffentlichungsnummer: **0 189 859**
**B1**

(12) **EUROPÄISCHE PATENTSCHRIFT**

(45) Veröffentlichungstag der Patentschrift: **13.06.90**

(21) Anmeldenummer: **86100923.1**

(22) Anmeldetag: **23.01.86**

(51) Int. Cl.⁵: **H 04 N 7/137**

(54) Verfahren zur Bildfehlerkorrektur.

(30) Priorität: **24.01.85 DE 3502315**

(43) Veröffentlichungstag der Anmeldung:
**06.08.86 Patentblatt 86/32**

(45) Bekanntmachung des Hinweises auf die
Patenterteilung:
**13.06.90 Patentblatt 90/24**

(84) Benannte Vertragsstaaten:
**AT BE CH DE FR GB IT LI NL SE**

(56) Entgegenhaltungen:
**US-A-3 825 680**

**10. JAHRESTAGUNG DER FKTG, München, 13. -
17. September 1982, Seiten 526-548, FKTG,
Mainz, DE; D. WESTERKAMP et al.: "Digitale
Magnetbandaufzeichnung von Video- und
Audiosignalen auf einem
Videocassettenrecorder"
IEEE Transactions on Communications, Vol.
COM-21, No. 6, June 1973, Pages 695 - 706;**

(73) Patentinhaber: **Siemens Aktiengesellschaft
Wittelsbacherplatz 2
D-8000 München 2 (DE)**

(72) Erfinder: **Strehl, Herbert, Dipl.-Ing.
Drozzaweg 15
D-8000 München 70 (DE)**

Courier Press, Leamington Spa, England.

## Beschreibung

Die Erfindung betrifft ein Verfahren zur Korrektur von Bildfehlern bei der Übertragung von DPCM-codierten Bildsignalen.

Bei der Übertragung von Bildsignalen sind zwei prinzipielle Methoden zur Korrektur von Bildfehlern bekannt, deren Ursache Störungen auf der Übertragungsstrecke sind, Bei der ersten Methode werden fehlerkorrigierende Codes zur Verringerung der Übertragungsfehler eingesetzt. Damit diese wirksam sind, benötigen sie jedoch einen Anteil von über 5% der gesamten Übertragungskapazität. Bei der zweiten Methode wird die sogenannte Bildfehlerverdeckung angewendet. Hierzu muß ein Übertragungsfehler nur erkannt werden und die gestörten Bildsignalwerte (PCM- oder DPCM-codierte Abtastwerte) werden durch Korrekturwerte ersetzt, die einem vorangegangenen Fernsehbild entnommen wurden oder durch Interpolation aus den umliegenden Bildsignalwerten gewonnen wurden. Werden die Korrekturwerte einem vorangegangenen Fernsehbild/Fernsehhalbbild entnommen, so ist empfangsseitig ein Bildspeicher/Halbbildspeicher erforderlich. Bei der Übertragung von bewegten Bildern können diese Korrekturwerte Störungen verursachen.

Erfolgt die Übertragung von Bildsignalen mit Hilfe der Differenz-Pulscode-Modulation (DPCM), so bewirkt die Störung eines einzigen DPCM-Werte bereits eine sogenannte Fehlerschleppe, die das Fernsehbild wesentlich stärker stört, als ein einzelner fehlerafter Bildsignalwert, wie er bie einer Übertragung von PCM-Signalen (PCM=Pulscode-Modulation) auftritt.

Es ist Aufgabe dieser Erfindung ein redundanzfreies Verfahren zur Korrektur von Bildfehlern anzugeben, das nur einen geringen Speicherbedarf aufweist.

Diese Aufgabe wird durch die im Patentanspruch 1 angegebene Merkmale gelöst. Vorteilhafte Ausbildungen sind in den abhangigen Ansprüchen angegeben.

Die Erfindung beruht auf der Erkenntnis, daß abhängig vom Prädiktionsalgorithmus bei einem Übertragungsfehler die erzeugte Fehlerschleppe eine bestimmte geometrische Struktur aufweist, wobei auch die Größe der Folgefehler der einzelnen PCM-Bildsignalwerte vom Prädiktionsalgorithmus bestimmt wird. Die typische Fehlerstruktur kann daher leicht erkannt werden; die entsprechenden Methoden sind aus der Schriftzeichenerkennung bekannt. Besonders einfach ist eine Fehlerschleppe natürlich in Bildteilen ohne eigene Structure zu erkennen und zu korrigieren. In stark gemusterten Bildteilen sind diese Fehlerschleppen schwieriger zu erkennen, sie stören dort aber auch bedeutend weniger, so daß auf eine Korrektur in diesen Bildteilen verzichtet werden kann. Zur Erkennung einer Fehlerschleppe ist es nur notwendig, wenige Bildzeilen (Fernsehzeilen) zwischenzuspeichern.

Die Fehlerschleppenerkennung und Korrektur kann selbstverständlich auch vor der Rücumsetzung in PCM-Signalwerte, die einem durch den Prädiktionsalgorithmus beschriebenen Integrationsverfahren gleicht, durchgeführt werden, hier ist dann nur das Erkennen jeweils eines gestörten DPCM-Signalwertes und dessen Korrektur erforderlich.

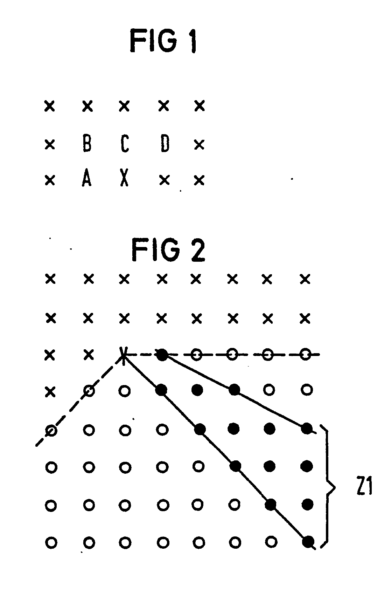

Anhand der Figuren 1 bis 5 wird das Verfahren näher erläutert.

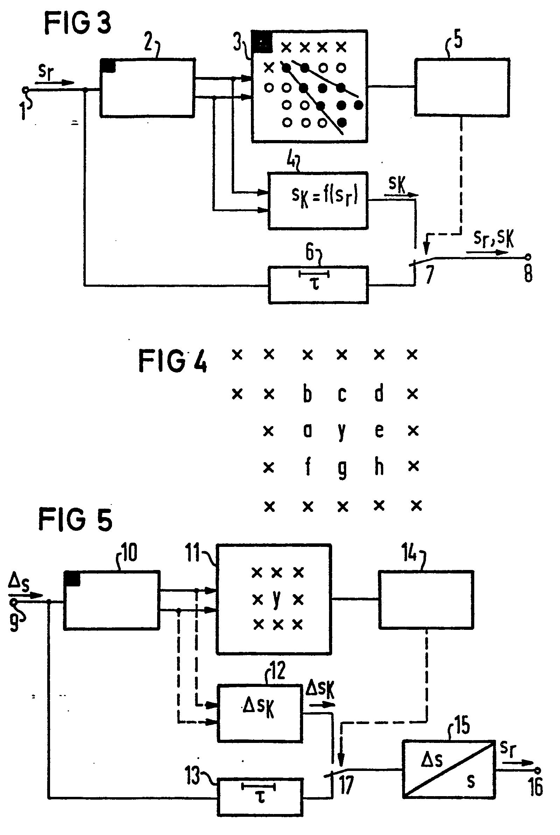

In IEEE Transactions on Communications, Vol. Com-21, No. 6, June 1973, Seiten 695 bis 706 sind in einem Aufsatz von Denis J. Conner verschiedene Techniken zur Reduzierung der Sichtbarkeit von Fehlern in Bildern bei der Übertragung DPCM-codierter Videosignale beschrieben. Neben einer heute nicht mehr überlichen eindimensionalen DPCM-Codierung mit einem Prädiktionsfaktor von 1 beschäftigt sich dieser Aufsatz bereits mit der heute üblichen mehrdimensionalen Prädiktion und gibt in Figur 3 bereits Darstellungen von Fehlermustern aufgrund von Störungen einzelner DPCM-Signalwerte an. Zur Verringerung der Sichtbarkeit von Fehlerschleppen wird eine spezielle Prädiktion vorgeschlagen, bei der die Anzahl der Fehlerschleppen bei einer gegebenen Fehlerrate halbiert wird.

Als zweite Möglichkeit wird eine Verringerung der Störungen durch einen Leak-Prädiktor vorgeschlagen.

Als dritte Möglichkeit (Seite 698, Spalte 1, zweiter Absatz) wird eine zeilenweise Korrektur vorgeschlagen. Eine Fehlererkennung erfolgt durch Paritätsbits. Dies Prinzip kann jedoch nur in einem entsprechend modifizierten Übertragungsverfahren eingeführt werden. Die gestörten Zeilen werden vollständig durch zwischengespeicherter Zeilen eines vorangegangenen Bildes oder mittels Interpolation gewonnene Werte desselben Halbbildes ersetzt. In unbewegten Bildteilen können zwischengespeicherte Bildsignalwerte, in bewegten Bildteilen dagegen durch Interpolation von angrenzenden Bildsignalwerten gewonnene Korrekturwerte verwendet werden.

Es zeigen

Fig. 1 einen Ausschnitt aus einem Fernsehbild,

Fig. 2 die prinzipielle Struktur einer Fehlerschleppe,

Fig. 3 das Prinzipschaltbild einer Korrekturvorrichtung,

Fig. 4 einen Ausschnitt aus einem DPCM-codierten Fernsehbild und

Fig. 5 eine Korrekturvorrichtung für DPCM-Signalwerte.

In Fig. 1 ist ein Ausschnitt aus einem Fernsehbild dargestellt. Die einzelnen Kreuze x und Buchstaben entsprechen jeweils einem PCM-Bildsignalwert (digitalisierter Abtastwert). Bei der Codierung wird bekanntermaßen aus den einen aktuellen PCM-Bildsignalwert X umgebenden Signalwerten, hier A, B, C und D ein Vorhersagewert

$$\hat{x} = a \times A + b \times B + c \times C) + d \times D$$

ermittelt, der mit dem aktuellen Bildsignalwert X verglichen wird. Die Differenz wird anschließend als DPCM-Signalwert Δs ausgesendet. Auf der Empfangsseite werden durch eine entsprechende Prozedur wiederum die PCM-Signalwerte aus den bereits rekonstruierten Signalwerten $A_r$, $B_r$, $C_r$ und $D_r$ und dem entsprechenden DPCM-Signalwert Δs ermittelt.

Wie in Fig. 2 dargestellt, kommit es bei der Verfälschung eines oder mehrerer der höherwertigen Bits eines DPCM-Signalwertes Δs zu einer Fehlerschleppe, deren Grenzen bei dem vorstehend angegebenen Prädiktionsalgorithmus—vom gestörten Signalwert Y aus gesehen—waagerecht zum Zeilenende hin und ca. diagonal nach links unten verlaufen. Eine deutlich sichtbare Kernzone Z1 mit stark gestörten PCM-Bildsignalwerten (Abtastwerten oder Bildpunkten) verläuft dabei vom ersten gestörten Bildsignalwert Y ausgehend ca. diagonal nach rechts unten. Die Intensität der Störungen nimmt hierbei im allgemeinen mit der Entfernung vom ersten gestörten Bildsignalwert Y rasch ab. Werden bei der Prädiktion nur positive Faktoren a, b, c, und d verwendet, so sind auch die Fehler der Bildsignalwerte gleichgerichtet, d.h. alle von der Störung betroffenen Bildpunkte werden beispielsweise einheitlich heller oder dunkler.

Der in Fig. 3 dargestellten Korrekturvorrichtung werden über einen Eingang 1 die von einem DPCM-Decoder kommenden rekonstruierten Bildsignalwerte $s_r$ (PCM-Werte) zugeführt. Der Eingang 1 ist mit dem Eingang eines Zeilenspeichers 2 verbunden, dessen Speicherkapazität nur wenige Bildzeilen (Fernsehzeilen) umfaßt. An die Ausgänge des Zeilenspeichers 2 ist eine Fehlerschleppenerkennung 3 angeschlossen, deren Ausgang an den Eingang einer Korrektursteuerung 5 angeschlossen ist. An die Ausgänge des Zeilenspeichers 2 ist außerdem eine Korrektureinrichtung 4 angeschaltet deren Ausgang auf dem ersten Eingang eines Umschalters 7 führt, dessen zweiter Eingang über ein Laufzeitglied 6 mit dem Eingang 1 der Korrekturvorrichtung verbunden ist. Der Umschalter 7, dessen Ausgang mit 8 bezeichnet ist, wird von der Korrektursteuerung 5 betätigt.

Die vom DPCM-Decoder kommenden rekonstruierten PCM-Bildsignalwerte $s_r$ werden in den Zeilenspeicher 2 eingeschrieben. Der Zeilenspeicher muß nur eine Speicherkapazität von wenigen Bildzeilen aufweisen (ca. 5 Bildzeilen). Die Fehlerschleppenerkennung 3 vergleicht im Prinzip die PCM-Bildsignalwerte innerhalb einer Fehlerschleppe miteinander und mit dem Bildsignalwerten außerhalb dieser Fehlerschleppe. Handelt es sich um eine gleichmäßige, unstrukturierte Bildfläche, so ergeben diese Vergleiche die bei dem verwendeten Prädiktionsalgorithmus auftretenden Fehler. Ist eine Fehlerschleppe erkannt, so wird von der Korrektursteuerung 5 der Umschalter 7 betätigt und von der Korrektureinrichtung 4 ermittelte Korrekturwerte $s_K$ an Stelle der über das Laufzeitglied 6 verzögerten PCM-Bildsignalwerte $s_r$ ausgegeben. Die Korrektureinrichtung kann sehr unterschiedlich aufgebaut sein. Es ist beispielsweise denkbar, die gestörten Bildsignalwerte einer Fehlerschleppe durch den letzten ungestörten Bildsignalwert (vor dem gestörten Bildsignalwerte Y) zu ersetzten. Die Korrektur kann auch in einer dem DPCM-Decoder ähnlichen Rechenschleife erfolgen, in die ein zum gestörten Bildsignalwert Y gehöriger ermittelter Korrekturwert und die folgenden gestörten PCM-Bildsignalwerte aus dem Zeilenspeicher 2 zu Korrekturzwecken eingegeben werden. Die Laufzeit des Laufzeitglieds 6 ist so bemessen, daß an den Eingängen des Umschalters 7 die einander entsprechenden PCM-Bildsignalwerte und Korrekturwerte anliegen.

In Fig. 4 sind den Bildsignalwerten, X, A, B, C . . . zugehörigen DPCM-Signalwerte, y, a, b, c, . . . dem Ausschnitt eines Fernsehbildes entsprechend dargestellt. Mit Hilfe eines DPCM-Signalwertes Δs=y und der rekonstruierten Bildsignalwerte $A_r$, $B_r$, $C_r$, $D_r$ wird der aktuelle PCM-Bildsignalwert X rekonstruiert usw. Werden gleichmäßige Bildteile übertragen, so sind alle DPCM-Signalwerte s ungefähr oder gleich Null. Ein gestörter DPCM-Signalwert weicht erheblich von den ihm umgebenen Bildsignalwerten ab. In diesem Fall kann mit großer Wahrscheinlichkeit auf eine Störung auf dem Übertragungsweg geschlossen werden. Ebenso einfach ist eine Korrektur. Ein gestörter DPCM-Signalwert y wird durch den Wert Null ersetzt. In abgewandelter Form kann dieses Verfahren auch bei etwas komplizierteren Bildstrukturen angewendet werden. Beispielsweise für Flächen in denen eine gleichmäßige Helligkeitsänderung auftritt. Der gestörte DPCM-Signalwert y wird dann durch einen Interpolationswert ersetzt, der aus den ihn umgebenen DPCM-Signalwerten oder aus bereits rekonstruierten PCM-Bildsignalwerten ermittelt wird.

Eine in der DPCM-Ebene arbeitende Korrekturvorrichtung ist in Fig. 5 dargestellt. Deren DPCM-Eingang 9 ist mit dem Eingang eines DPCM-Zeilenspeichers 10 und mit dem Eingang eines Laufzeitgliedes 13 verbunden. Die Ausgänge des DPCM-Zeilenspeichers 10 sind mit den Eingängen einer Fehlererkennung 11 verbunden, deren Ausgang mit einer DPCM-Korrektursteuerung 14 verbunden ist. Außerdem sind die Ausgänge des DPCM-Zeilenspeichers 10 mit den Eingängen einer DPCM-Korrektureinrichtung 12 verbunden, deren Ausgang mit dem ersten Eingang eines Umschalters 17 verbunden ist, dessen zweiter Eingang an den Ausgang des Laufzeitgliedes 13 angeschaltet ist. Der Umschalter 17 wird von der DPCM-Korrektursteuerung 14 betätigt. An den Ausgang des Umschalters ist ein DPCM-Decoder 15 angeschaltet, der an seinem Ausgang 16 die rekonstruierten Bildsignalwerte $s_r$ ergibt.

Die in Fig. 5 dargestellte Korrekturvorrichtung für DPCM-Signalwerte Δs entspricht im prinzipiellen Aufbau der Korrekturvorrichtung für PCM-Bildsignalwerte. Der Korrekturvorrichtung für DPCM-Signalwerte ist jedoch der DPCM-Decoder nachgeschaltet. In den DPCM-Zeilenspeicher 10 werden wiederum die DPCM-Signalwerte Δs für mehrere aufeinanderfolgende Bildzeilen eingespeichert. Die DPCM-Fehldererkennung 11 überprüft lediglich, ob in einem gleichförmigen Bildteil ein einzelner DPCM-Signalwert x von den ihn umgebenden DPCM-Signalwerten, die alle den Wert Null oder einen sehr kleinen Wert aufweisen, abweicht. In diesem Fall wird über die DPCM-Korrektursteuerung 14 der Umschalter 17 aus der dargestellten Ruhelage an den Ausgang der DPCM-Korrektureinrichtung 12 angeschaltet, an deren Ausgang der DPCM-Korrekturwert $\Delta s_k$ anliegt. Als DPCM-Korrekturwert $\Delta s_K$ kann im einfachsten Fall der Wert Null verwendet werden, ebenso ist est möglich—wie bereits erwähnt—den DPCM-Korrekturwert durch Interpolation aus dem an ihn angrenzenden DPCM-Signalwerten zu gewinnen. Beispielsweise

$$\Delta s_K = \tfrac{1}{2}a + \tfrac{1}{4}b + \tfrac{1}{4}c,$$

wobei a der DPCM-Signalwert vor dem gestörten DPCM-Signalwert y ist, c direkt über y und b vor c liegt. Der DPCM-Decoder 15 setzt die DPCM-Signalwert $\Delta s$ bzw. $\Delta s_K$ in bekannter Weise in rekonstruierte PCM-Bildsignalwerte $s_r$ um, die an seinem Ausgang 16 abgegeben werden.

Mit der in Fig. 5 dargestellten DPCM-Korrekturvorrichtung können auch codierte DPCM-Signalwerte verarbeitet werden, bei denen jedem ursprünglichen DPCM-Signalwert von einem sendeseitigen Codierer eine bestimmte Binärkombination zugeordnet ist. Die DPCM-Fehlererkennung muß dies jedoch berücksichtigen. Erfolgt die Quantisierung der DPCM-Signalwert mit unterschiedlichen Quantisierungskennlinien, so ist eine entsprechende Decodiereinrichtung dem DPCM-Eingang 9 vorzuschalten.

Vom Schaltungsaufwand abgesehen ist es gleichgültig, ob eine Korrektur der PCM-Bildsignalwerte oder der DPCM-Signalwerte erfolgt, da die DPCM-Signalwerte gewissermaßen eine Ableitung der PCM-Bildsignalwerte darstellen. Selbstverständlich ist es ebenfalls möglich, beispielsweise eine Fehlererkennung durch Überprüfung der DPCM-Signalwerte vorzunehmen und eine Korrektur des gestörten PCM-Bildsignalwertes vorzunehmen.

## Patentansprüche

1. Verfahren zur Korrektur von Bildfehlern bei der Übertragung DPCM-codierter Bildsignale, die mittels mehrdimensionaler Prädiktion ermittelt wurden und bei dem gestörte Bildsignalwerte durch Korrekturwerte ($s_k$) ersetzt werden, dadurch gekennzeichnet, daß empfangsseitig nur Bildsignalwerte(s) von wenigen Fernsehzeilen zwischengespeichert (2) werden, daß eine Fehlerschleppenerkennung (3) durch Analyse der Bildstruktur eines Fernsehbildes/Fernsehhalbbildes durchgeführt wird und daß zur Fehlerschleppenerkennung ständig eine Bewertung der rekonstruierten PCM-Bildsignalwerte ($s_r$) innerhalb und außerhalb der geometrischen Struktur der Fehlerschleppe durchgeführt wird.

2. Verfahren nach Anspruch 1, dadurch gekennzeichnet, daß eine Bildfehlerkorrektur durchgeführt wird, wenn die an die stärker gestörten Bildsignalwerte der Kernzone (ZI) angrenzenden rekonstruierten PCM-Signale und/oder die an eine Fehlerschleppe angrenzenden ungestörten PCM-Bildsignalwerte zumindest nahezu gleich groß sind.

3. Verfahren nach Anspruch 1, dadurch gekennzeichnet, daß der oder die Korrekturwerte ($s_k$) durch Interpolation aus den die Fehlerschleppe umgebenden PCM-Bildsignalwerten ermittelt werden.

4. Verfahren zur Korrektur von Bildfehlern bei der Übertragung DPCM-codierter Bildsignale, die mittels mehrdimensionaler Prädiktion ermittelt werden und bei dem gestörte Bildsignalwerte durch Korrekturwerte ($s_k$) ersetzt werden, dadurch gekennzeichnet, daß als Bildsignalwerte DPCM-Signalwerte ($\Delta s$) zwischengespeichert (10) werden und zur Fehlerschleppenerkennung ein Vergleich benachbarter DPCM-Signale ($\Delta s$) durchgeführt sind.

5. Verfahren nach Anspruch 1 oder 4, dadurch gekennzeichnet, daß eine Korrektur von gestörten Bildsignalwerten ($s_r$) einer Fehlerschleppe erfolgt, indem anstelle des diese Fehlerschleppe verursachenden gestörten DPCM-Signalwertes ($\Delta s$) DPCM-Korrekturwert ($\Delta s_k$) einem DPCM-Decoder (15) zugeführt wird.

6. Verfahren nach Anspruch 5, dadurch gekennzeichnet, daß eine DPCM-Korrekturwert ($\Delta s_k$) der Größe Null verwendet wird.

7. Verfahren nach Anspruch 5, dadurch gekennzeichnet, daß der DPCM-Korrekturwert ($\Delta s_k$) durch Interpolation aus den engrenzenden DPCM-Signalwerten ($\Delta s$) oder PCM-Bildsignalwerten ($s_r$) ermittelt wird.

8. Verfahren nach Anspruch 4 oder 7, dadurch gekennzeichnet, daß die Interpolation mit Hilfe einer Rechenschleife durchgeführt wird.

9. Verfahren nach Anspruch 4, dadurch gekennzeichnet, daß sin Korrekturwert $\Delta s_k = 1/2a + 1/4b + 1/4c$ ermittelt wird, wobei a der DPCM-Signalwert vor dem gestörten DPCM-Signalwert ist, c direkt über diesem und b vor c liegt.

## Revendications

1. Procédé de correction de défauts d'images lors de la transmission de signaux d'images, qui sont codés selon le codage MICD et ont été déterminés au moyen d'une prédiction multidimensionnelle, et selon lequel on remplace des valeurs perturbées du signal d'image par des valeurs de correction ($s_k$), caractérisé par le fait que, côté réception, on mémorise temporairement (2) uniquement des valeurs (s) du signal d'image de quelques lignes de télévision, qu'on exécute une identification (3) de la suite de défauts au moyen d'une analyse de la structure d'une image de télévision/trame de télévision, et que pour l'identification de la suite de défauts, on exécute en permanence une évaluation des valeurs reconstituées ($s_r$) du signal d'image MIC à l'intérieur et à l'extérieur de la structure géométrique de la suite de défauts.

2. Procédé suivant la revendication 2, caractérisé par le fait qu'on exécute une correction de défauts d'images lorsque les signaux MIC reconstitués, qui sont adjacents aux valeurs les plus fortement perturbées du signal d'image dans la zone central (ZI) et/ou les valeurs du signal d'image MIC non perturbées, qui sont adjacentes à une suite de défauts, sont au moins approximativement égales.

3. Procédé suivant la revendication 1, caractérisé par le fait que la ou les valeurs de correction ($s_k$) sont déterminées par l'interpolation à partir des valeurs du signal d'image MIC, qui entourent la suite de défauts.

4. Procédé pour corriger des erreurs d'images lors de la transmission de signaux d'images, qui sont codés selon le codage MCD et ont été déterminées au moyen d'une prédiction multidimensionnelle, et selon lequel on remplace des valeurs perturbées du signal d'image par des valeurs de correction ($s_k$), caractérisé par le fait qu'on mémorise temporairement (10) des valeurs du signal MICD ($\Delta s$) en tant que valeurs du signal d'image et qu'on exécute, pour l'identification de la suite de défauts, une comparaison de signaux MICD ($\Delta s$) voisins.

5. Procédé suivant la revendication 1 ou 2, caractérisé par le fait qu'une correction de valeurs perturbées ($s_r$) du signal d'image d'une suite de défauts est exécutée par le fait qu'on envoie au décodeur MICD (15) une valeur de correction MICD ($\Delta s_k$) à la place de la valeur perturbée ($\Delta s$) du signal MICD, qui est provoquée par cette suite de défauts.

6. Procédé suivant la revendication 5, caractérisé pa le fait qu'on utilise une valeur de correction MICD ($\Delta s_k$) possédant la valeur nulle.

7. Procédé suivant la revendication 5, caractérisé par le fait qu'on détermine la valeur de correction MICD ($\Delta s_k$) par interpolation à partir des valeurs adjacentes ($\Delta s_k$) du signal MICD ou de valeurs adjacentes ($s_r$) du signal d'image MIC.

8. Procédé suivant la revendication 4 ou 5, caractérisé par le fait que l'interpolation est exécutée à l'aide d'une boucle de calcul.

9. Procédé suivant la revendication 4, caractérisé par le fait qu'on détermine une valeur de correction ($\Delta s_k = 1/2a + 1/4b + 1/4c$, a étant la valeur du signal MIC apparaissant avant la valeur perturbée du signal MIC, c la valeur située directement avant cette valeur perturbée et b avant c.

**Claims**

1. Method for correcting picture errors when transmitting DPCM-coded picture signals which have been established by means of multidimensional prediction and in which adulterated picture signal values are replaced by correction values ($s_k$), characterized in that, on the receive side, only picture signal values (s) of a few television lines are intermediately stored (2), in that an error trail detection (3) is carried out by analysing the picture structure of a television picture/television half-frame, and in that, for the purpose of error trail detection, an evaluation of reconstructed PCM picture signal values ($s_r$) is constantly carried out inside and outside the geometric structure of the error trail.

2. Method according to Claim 1, characterized in that a picture error correction is carried out when the reconstructed PCM signals adjacent to the more heavily adulterated picture signal values of the core zone (ZI) and/or the unadulterated PCM picture signal values adjacent to an error trail are at least approximately equal.

3. Method according to Claim 1, characterized in that the correction value(s) ($s_{k)}$) is/are established by interpolation of the PCM picture signal values surrounding the error trail.

4. Method for correcting picture errors when transmitting DPCM-coded picture signals which have been recognized by means of multidimensional prediction and in which adulterated picture signal values are replaced by correction values ($s_k$), characterized in that, as picture signal values, DPCM signal values ($\Delta s$) are intermediately stored (10) and, for the purpose of error trail detection, a comparison is carried out between adjacent DPCM signals ($\Delta s$).

5. Method according to Claim 1 or 4, characterized in that a correction of adulterated picture signal values ($s_r$) of an error trail occurs in that, instead of the adulterated DPCM signal value ($\Delta s$) causing this error trail, a DPCM correction value ($\Delta s_k$) is fed to a DPCM decoder (15).

6. Method according to Claim 5, characterized in that a DPCM correction value ($\Delta s_k$) equal to zero is used.

7. Method according to Claim 5, characterized in that the DPCM correction value ($\Delta s_k$) is established by interpolation of the adjacent DPCM signal values ($\Delta s$) or of the PCM picture signal values ($s_r$).

8. Method according to Claim 4 or 7, characterized in that the interpolation is carried out with the aid of a calculating loop.

9. Method according to Claim 4, characterized in that a correction value $\Delta s_k = 1/2a + 1/4b + 1/4c$ is established, a being the DPCM signal value in front of the adulterated DPCM signal value, c lying above this and b directly in front of c.

## FIG 1

## FIG 2

## FIG 3

$$s_K = f(s_r)$$

$$s_r, s_K$$

## FIG 4

```
×  ×   ×  ×   ×  ×
   ×  ×  b  c  d  ×
      ×  a  y  e  ×
      ×  f  g  h  ×
      ×  ×  ×  ×  ×
```

## FIG 5

$$\Delta s$$

$$\Delta s_K$$

$$\frac{\Delta s}{s}$$

$$s_r$$

2